# DEMANDE DE BREVET EUROPEEN

(11) **EP 3 467 743 A1**
(43) Date de publication de la demande: **10.04.2019**
(21) Numéro de dépôt: 17306324.9
(22) Date de dépôt: 03.10.2017
(51) Int. Cl.: G06Q 20/10, G06Q 20/34

(54) **PROCEDE ET SYSTEME POUR REALISER UNE TRANSACTION DE PAIEMENT SUR UN TERMINAL BANCAIRE AVEC UN DISPOSITIF ELECTRONIQUE**

(71) Demandeur: GEMALTO SA, 92190 Meudon (FR)
(72) Inventeur: LEMAIRE, François, 13881 GEMENOS Cedex (FR); LAMBERT, Jean, 13881 GEMENOS Cedex (FR)

(57) **Abrégé**

L'invention concerne un procédé pour réaliser une transaction de paiement sur un terminal bancaire (2, POS) avec un dispositif (1) de paiement électronique, ledit dispositif comprenant au moins deux applications de paiement (1-4), ledit procédé comprenant :
- une étape de communication de données (STATUS) du dispositif vers le terminal lors d'une transaction, lesdites données comprenant des au moins des informations d'un premier type (ADF) identifiant chaque application de paiement du dispositif,
- une étape d'association de valeurs économiques (V1-V4) d'avantages pour l'usage de l'une et/ou l'autre application de paiement ;

Le procédé est caractérisé en ce qu'il comprend une étape de configuration du terminal pour effectuer une sélection manuelle (POsnEx) ou automatique (POSauto) dans le terminal (2) d'une application de paiement en fonction de ces avantages.

L'invention concerne également le système correspondant.

## Description

### Domaine de l'invention.

L'invention concerne un procédé et un système pour réaliser une transaction de paiement sur un terminal bancaire avec un dispositif électronique comprenant plusieurs applications de paiement.

Plus particulièrement, le procédé ou système met en oeuvre (ou est configuré pour effectuer) une communication d'informations relatives à plusieurs applications de paiement. De préférence, l'invention est conforme ou compatible avec des standards bancaires notamment le standard EMV.

L'invention concerne plus particulièrement des dispositifs électroniques équipés d'applications logicielles de transaction électronique. Les transactions visent notamment mais pas exclusivement les transactions électroniques de paiement de proximité à contacts ou sans-contact. Elle vise les transactions de proximité NFC (Near Field Communication en anglais), par exemple par le biais de communications radiofréquences selon l'ISO 14443. Elle peut viser des transactions mettant en oeuvre des (QR code) (code barre à deux dimensions).

Ces dispositifs comprennent notamment des dispositifs électroniques de communication (téléphone portable, tablette, PDA assistant personnel, accessoires électroniques à porter tels que des montres communicantes ou NFC). Le dispositif de paiement peut être également tout support d'applications de paiement ou tout dispositif de paiement, dont notamment la carte à puce. Certaines cartes à puce peuvent comprendre des interfaces d'utilisateur (écran, clavier, capteur biométrique...) et/ou des interfaces de communication diverses (NFC, ISO 7816, Bluetooth...)

Ces dispositifs sont pour certains destinés à des transactions électroniques, notamment financières, telles que des achats qui peuvent être réalisés en ligne via internet sur des sites marchands, mais aussi localement chez des commerçants à l'aide d'un terminal de paiement POS (Point of Sale Terminal en terminologie anglo-saxonne), de distributeurs automatiques de billets (DAB) ou ATM (Automatic Teller Machines en terminologie anglo-saxonne), de distributeurs automatiques de marchandises tels que carburant, boissons, etc., dans des restaurants d'entreprise, des magasins....

### Art antérieur.

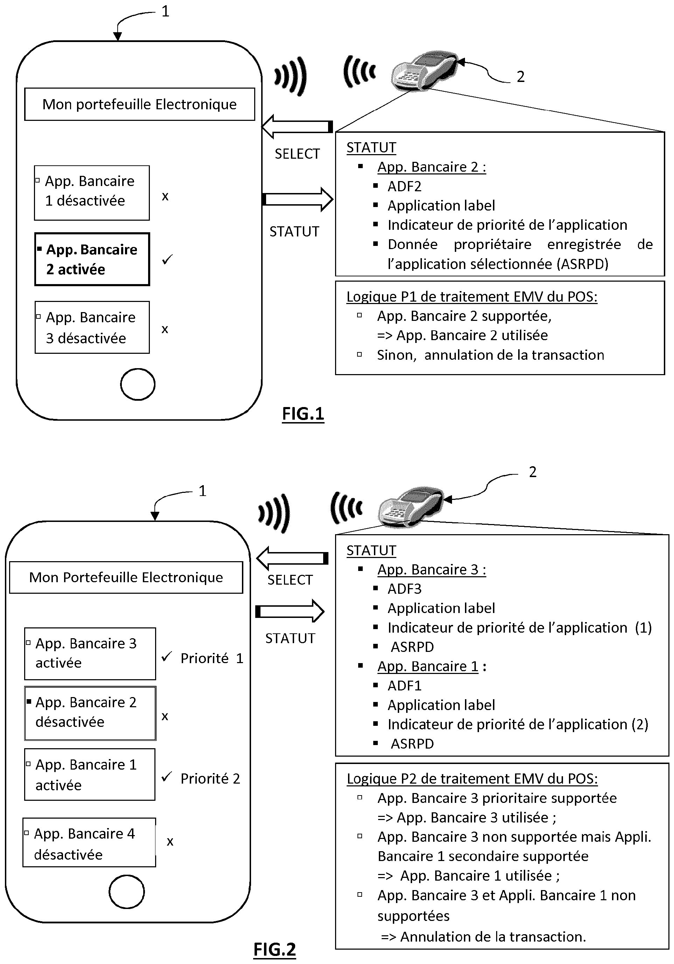

Actuellement, il existe un procédé de réalisation d'une transaction de paiement sur un terminal bancaire avec un dispositif de paiement électronique (téléphone portable) comprenant plusieurs applications de paiement. Ce procédé est conforme au standard EMV et est illustré sur les figures 1 et 2.

Le procédé connu ci-dessus prévoit que le terminal émette une requête d'interrogation (SELECT) d'une liste des applications bancaires présentes et activées par un utilisateur sur le dispositif; Il prévoit également que le dispositif de paiement émette une réponse (STATUT) à cette requête. La réponse, conforme notamment à EMV, comprend des informations relatives à au moins une application de paiement si cette dernière a été activée.

### Problème technique.

Les inventeurs ont observé que le procédé de paiement EMV est mal adapté, limité et peu pratique pour permettre d'effectuer des offres commerciales en fonction des applications bancaires présentes dans un dispositif de paiement d'un utilisateur client.

### Objectif de l'invention.

L'invention a notamment pour objectif de résoudre les inconvénients susvisés ou de satisfaire le besoin pressenti ci-dessus.

En particulier, l'invention vise à permettre aux marchands d'influencer un utilisateur client dans le choix d'une application logicielle de paiement ou une carte virtuelle bancaire électronique, pour effectuer la prochaine transaction de paiement de proximité parmi celles présentes.

L'invention a également pour objectif de proposer, une expérience utilisateur améliorée dans la réalisation de transaction de paiement, tout en évitant des changements complexes et coûteux dans l'infrastructure de paiement existante, en s'appuyant de préférence sur un cadre EMV établi.

L'invention a également pour objectif de permettre à l'utilisateur de choisir et/ou exécuter plus facilement une transaction selon ses critères propres, parmi l'une ou l'autre application de paiement présente.

### Résumé de l'invention.

L'invention consiste, selon un aspect, à associer des avantages (ou autre mesure quelconque incitative) à au moins l'une des applications de paiement présentes pour inciter un choix d'application de paiement plutôt qu'une autre.

De manière avantageuse, le choix peut s'effectuer parmi des applications logicielles de paiement activées et/ou même non-activées situées dans un dispositif de paiement de l'utilisateur. Autrement dit, l'invention permet de proposer différentes offres spéciales en fonction du choix de l'application de paiement activée ou non activée que l'utilisateur client choisit pour la transaction.

L'invention permet également de donner, un ensemble d'informations diverses relatives aux applications de paiement activées et non activées dans le dispositif de paiement.

A cet effet, l'invention a pour objet un procédé pour réaliser une transaction de paiement sur un terminal bancaire avec un dispositif de paiement électronique, ledit dispositif comprenant au moins deux applications logicielles de paiement, ledit procédé comprenant :
- une étape de communication de données du dispositif vers le terminal lors d'une transaction, lesdites données comprenant au moins des informations d'un premier type identifiant chaque application de paiement du dispositif,
- une étape d'association de valeurs économiques d'avantages (ou autre mesure) pour l'usage de l'une et/ou l'autre application de paiement ;

Le procédé est caractérisé en ce qu'il comprend une étape de configuration du terminal pour effectuer une sélection directe de l'utilisateur (interaction notamment manuelle de l'utilisateur lors de la transaction) ou automatique dans le terminal d'une application de paiement en fonction de ces avantages (ou d'une mesure associée).

Selon d'autres caractéristiques ou modes préférés
- Les données peuvent comprendre de préférence des informations d'un premier type relatives à au moins une application non-activée ;
- Le procédé peut comprendre une étape de mémorisation desdites données dans un répertoire du dispositif réservé à des applications activées ;
- Le procédé peut comprendre une étape de configuration du dispositif de manière que lesdites données communiquées comprennent des informations d'un troisième type relatif à des catégories d'avantages préférentiels (PR, Pb, Pc). Ils peuvent être présélectionnés par un utilisateur dans son dispositif.
- Les données communiquées peuvent être placées de préférence dans un champ de données discrétionnaires des émetteurs FCI (Tag 'BF0C'), dans un champ des entrées du répertoire (Tag '61') ou dans un champ de données propriétaires de sélection d'application enregistrées (ASRPD, Tag '9F0A').

L'invention a également pour objet un système correspondant au procédé ci-dessus. En particulier, elle a pour objet un système pour réaliser une transaction de paiement sur un terminal bancaire avec un dispositif de paiement électronique, ledit dispositif comprenant au moins deux applications logicielle de paiement, ledit système étant configuré pour :
- effectuer une de communication de données du dispositif vers le terminal lors d'une transaction, lesdites données comprenant des au moins des informations d'un premier type identifiant chaque application de paiement du dispositif,
- associer des valeurs économiques d'avantages (ou de mesures incitatives) pour l'usage de l'une et/ou l'autre application de paiement ;

Le système est caractérisé en ce que le terminal est configuré pour effectuer une sélection directe par l'utilisateur ou automatique dans le terminal d'une application de paiement en fonction de ces avantages (ou mesures incitatives).

Selon d'autres caractéristiques, le système peut comprendre un centre serveur bancaire et/ou un centre serveur de marchands et en ce qu'il est configuré de manière que, lors d'une transaction, le dispositif et/ou le terminal interroge(nt) l'un desdits centres serveurs pour avoir des informations complémentaires économiques ou pour interagir avec ces serveurs.

L'invention a l'avantage de pouvoir être complètement compatible avec l'infrastructure EMV existante, c'est-à-dire que le dispositif de paiement équipé de cette solution fonctionnera toujours dans une infrastructure EMV normale.

L'invention a l'avantage d'offrir une opportunité au marchand de reprendre le contrôle de l'application de paiement utilisée pour la transaction. Il le fait en obtenant des informations relatives aux applications de paiement disponibles dans le portefeuille électronique de l'utilisateur (activées ou non, prioritaire ou non) et en proposant des alternatives de paiement commercialement plus favorables.

Ainsi, le commerçant peut, par exemple, éviter une application de paiement avec des frais de transaction élevés et proposer des alternatives moins coûteuses. La différence de frais peut éventuellement être répartie entre le commerçant et l'utilisateur, d'une manière décidée par le commerçant: réduction directe des prix, remboursement, points de fidélité, coupons, bons, etc.

L'application de paiement dans le dispositif de paiement peut être mise à jour dynamiquement par la banque émettrice de l'utilisateur, avec des informations telles que l'état d'activation, une liste blanche de marchands, une liste noire de marchands, l'adhésion à un programme de fidélisation etc.

En outre, l'utilisateur peut paramétrer un déroulement plus ou moins automatique des transactions. Il peut aussi sélectionner / paramétrer ses préférences économiques pour que le POS du marchand en tienne compte (ou un centre serveur de marchand distant lié au POS).

### Brève description des figures.

- Les figures 1 et 2 illustrent le procédé et système actuel de transaction de paiement entre un POS et un téléphone portable doté d'application de paiement électronique sans-contact, conformes à l'art antérieur ;
- La figure 3 illustre un premier mode préféré de mise en oeuvre du procédé de transaction électronique de paiement de l'invention (et système correspondant);
- La figure 4 illustre un second mode de mise en oeuvre du procédé de transaction électronique de paiement de l'invention (et système correspondant);
- La figure 5 illustre un troisième mode de mise en oeuvre du procédé de transaction électronique de paiement de l'invention (et système correspondant);
- Les figures 6 et 7 illustrent respectivement un schéma bloc électronique du dispositif de paiement 1 et du terminal de paiement 2 ;

Les figures 8 et 9 illustrent respectivement des étapes (selon un mode préféré de réalisation de l'invention), d'un procédé ou d'un programme correspondant pour le dispositif de paiement 1 et pour le terminal de paiement 2.

### Description.

Les mêmes références d'une figure à l'autre, indiquent des constituants identiques ou similaires.

A la figure 1 sont illustrés un procédé et système courants, illustrant l'art antérieur, pour effectuer une transaction de paiement entre un POS (1) et un téléphone portable (2) doté d'applications de paiement électronique sans-contact (3).

Le terminal de paiement POS est conforme à ceux du marché. Il comprend une structure sécurisée et des fonctions homologuées / standardisées EMV (Europay Mastercard Visa), qui est le standard international des transactions de paiement sécurisées. Le POS peut être doté notamment d'un lecteur de carte à contact ou sans-contact, et d'interface(s) homme / machine tels que clavier, écran ainsi que de moyens de communication sans-contact notamment NFC (Near Field Communication - radiofréquence de proximité) avec le téléphone 2. Il peut être doté de préférence d'un module de sécurité à puce électronique SAM et des moyens électroniques chiffrés pour communiquer avec un serveur central bancaire (notamment pour une collecte périodique des informations de transaction et/ou de mise à jour), ou un serveur de (ou pour) marchands.

Le dispositif de paiement (dit portefeuille de paiement électronique), quant à lui, peut constituer ou comprendre tout dispositif de paiement avec des applications bancaires de paiement, simulant / émulant des cartes bancaires (par exemple montre intelligente, badge, bracelet porte-monnaie électronique...). Le dispositif 1 est ici sous forme de téléphone. Il peut comprendre une fonction d'émulation carte sans-contact selon le standard ISO 14443 et/ou ISO/IEC 18092 de manière à communiquer avec le POS en étant perçu par lui comme une carte à puce sans-contact.

Il intègre également des circuits électroniques ou des puces à circuit intégré. Il intègre une interface homme / machine ici sous forme d'un écran tactile. Il intègre des applications ou programmes de fonctionnement applicatifs, stockés en mémoire notamment EEPROM ou flash pour notamment effectuer des opérations bancaires, de fidélité ou autres. Ces programmes applicatifs sont exécutés par une unité de traitement principal µC2 ou dans un ou des circuits électroniques ou des puces électroniques à circuits intégrés associés tel un élément de sécurité électronique « eSE ».

Selon le standard EMV, le procédé ou système met en oeuvre une requête « SELECT » du terminal POS 1 vers le téléphone (ou dispositif de paiement) et une réponse « statut » du dispositif de paiement 2 vers le POS; Cette réponse comprend une première information relative à au moins une application de paiement uniquement si cette dernière est activée. En fait, le flux EMV comprend la commande « SELECT PSE ou PPSE » (c'est l'application répertoire) du POS vers le dispositif puis le dispositif envoie une réponse avec « STATUT » puis le POS envoie la commande « SELECT APP. » pour sélectionner une application. La commande « SELECT » mentionnée dans les figures, correspond plus précisément à la commande « SELECT PPSE ».

Dans l'exemple fig. 1, illustrant l'art antérieur, le téléphone 1 comprend trois applications de transaction de paiement bancaire simulant des cartes électroniques 1-3 dont seule la carte ou application de paiement 2 est activée.

Selon l'invention, le terme « activée » pour une application bancaire, signifie que l'utilisateur a sélectionné parmi des applications bancaires présentes dans son dispositif une application qu'il souhaite utiliser au cours d'une prochaine transaction. Sur le plan technique, au sens du standard EMV et logiciel correspondant, un statut d'application « activée » provoque une mémorisation d'informations / caractéristiques d'une application dans un registre / répertoire PPSE (Proximity Payment System Environment (uniquement en sans-contact). Uniquement les applications activées (et non bloquées par un émetteur bancaire) sont listées dans ce registre PPSE.

Dans la réponse « STATUT » à une requête « SELECT », ce sont les informations des applications activées comprenant un identifiant d'application « ADF », contenues de ce registre, qui sont transmises au POS par le dispositif. Lorsque le dispositif est une carte sans-contact, le PPSE contient la liste de toutes les applications de cartes bancaires prises en charge par l'interface sans-contact ; Son contenu est renvoyé par la carte en réponse à une commande SELECT du lecteur. S'il y a plusieurs applications dans la liste des candidats, soit le terminal choisit l'application qu'il préfère, soit la sélection est donnée au porteur. Après l'achèvement de cette étape, le terminal procède à la sélection de l'application.

Lors d'un premier échange, (comprenant un ATR), la carte (ou le téléphone) renvoie un « statut » avec une information concernant la carte ou application bancaire de paiement 2. L'information comprend ici au minimum l'« ADF Name » (Application Définition File, Tag '4F') tel que défini dans les standard EMV : « EMV Contactless Spécifications for payment Systems - Book B - Entry point Spécification). D'autres données telles que le label de l'application (Tag '50', optionnel) ou l'Application Priority Indicator (Tag '87', conditionnel) peuvent être renvoyées. L'« ADF Name » permet au terminal de paiement d'identifier le moyen de paiement (application logicielle de paiement) sur le dispositif électronique, comme le spécifie le standard EMV.

A réception de l'information STATUT, ensuite, une logique de traitement EMV ci-après est exécutée par le POS. Si le POS supporte l'application de paiement 2 (ou carte bancaire 2), alors l'application de paiement 2 est utilisée par le POS pour la prochaine transaction de paiement. Dans le cas contraire, la transaction de paiement est annulée. Le POS 2 n'a ici aucune connaissance des applications bancaires 1 et 3 non activées présentes dans le téléphone 1.

A la figure 2, le système ou procédé diffère en ce qu'il comporte quatre applications ou cartes de paiement parmi lesquelles l'application bancaire 3 de priorité élevée 1 et l'application bancaire 1 de priorité faible 2 sont activées.

Le « statut » est transmis au POS de la même manière que précédemment mais ici en indiquant deux applications activées 3 et 1 ainsi que leur niveau de priorité (1 et 2). Dans ce cas, et selon le mode de réalisation le plus classique dans le standard EMV, la logique de traitement EMV ci-après est exécutée par le POS.

Si le POS supporte l'application bancaire 3 avec plus grande priorité 1, alors l'application bancaire 3 est utilisée ; Si le POS ne supporte pas l'application bancaire 3 mais supporte l'application bancaire 1 avec plus faible priorité 2, alors l'application bancaire 1 est utilisée ; Si le POS ne supporte aucune des deux, alors la transaction est annulée. Il peut y avoir des modes dérogatoires dans le standard EMV, où le terminal de paiement a été configuré pour forcer l'usage de l'application de seconde priorité.

On précise ici, que le POS 2 ignore tout des applications bancaires 2 et 4 non activées présentes dans le téléphone 1. (Le PPSE ne contient pas leur identifiant (ADF) selon le standard EMV puisqu'elles ne sont pas activées).

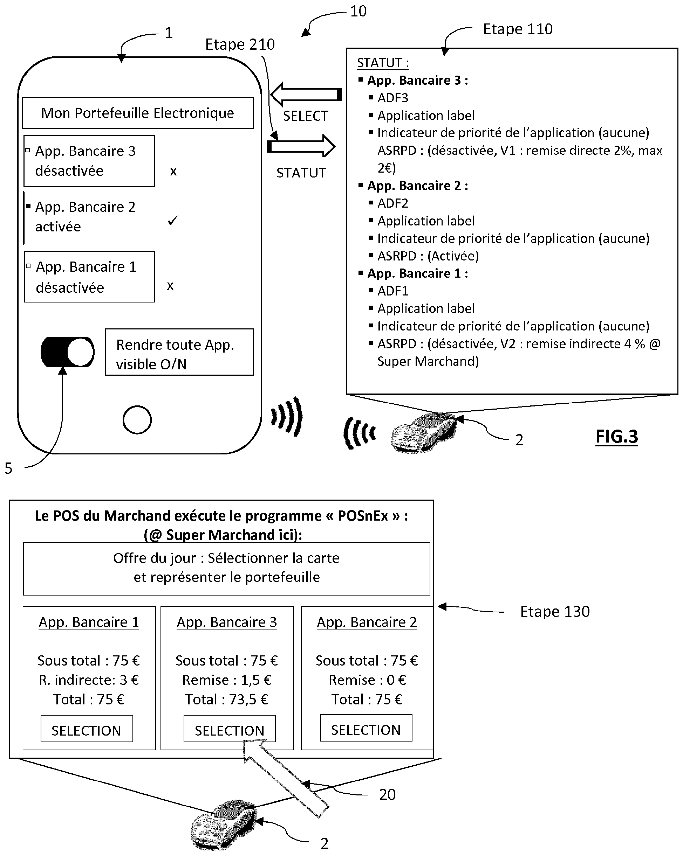

### Description de généralités relatives aux figures 3-5.

Les figures 3-5 illustrent différents modes de mise en oeuvre du procédé de l'invention pour réaliser une transaction de paiement sur un terminal bancaire (2, POS) avec un dispositif (1) de paiement électronique.

Selon une caractéristique, le dispositif 1 comprend au moins deux applications logicielles de paiement (1-4). Elles peuvent être les deux activées (exemple 1bis) ou non activées, prioritaires ou non prioritaires. L'une peut être activée tandis que l'autre est non-activée (exemple 2bis). Toutes les applications peuvent être non-activées (exemple 3bis).

Selon une autre caractéristique, le procédé comprend une étape de communication de données du dispositif vers le terminal lors d'une transaction. Ces données comprennent au moins des informations d'un premier type (ADF2) identifiant chaque application de paiement du dispositif 2.

Dans un premier exemple 1bis (non illustré par les figures), au moins deux applications de paiement sont activées (de préférence directement par l'utilisateur ou sans exclure une activation autrement, par exemple, par un serveur notamment via OTA) dans le dispositif. Cette activation peut provoquer une insertion d'au moins leur identifiant ADFx, ADFy dans un registre PPSE du dispositif. Cela permet de rendre visible de manière connue (comme à la figure 2 pour les applications bancaire 1 et 3), les applications activées, par le terminal bancaire POS 2 au cours d'une transaction.

Selon une autre caractéristique, le procédé comprend également une étape d'association de valeurs économiques d'avantage(s) (ou mesures incitatives) à l'usage de l'une ou l'autre application de paiement.

Dans les exemples, ces avantages économiques ou valeurs d'avantages (mesures incitatives) peuvent être attribuées par un émetteur de carte bancaire électronique (ou application logicielle de paiement) tel qu'une banque quelconque. Ces avantages peuvent être introduits dans le mobile de l'utilisateur en étant associé à l'application (ou la carte) électronique de paiement.

Les avantages peuvent résulter d'un accord commercial entre une enseigne / un marchand et une banque émettrice de l'application ou une carte bancaire électronique ou l'émetteur d'un portefeuille électronique accueillant plusieurs applications ou cartes de paiement.

Par exemple, des premiers avantages (V1-V4) peuvent être introduits à l'aide d'une mise à jour ou une communication OTA (Over the Air) avec le mobile en provenance d'un centre serveur OTA d'une banque émettrice ou entité agissant pour le compte de la banque émettrice. Ces avantages peuvent être ajoutés directement à chaque application de paiement, notamment dans le registre PPSE, et pris en compte au cours d'une transaction, lors d'une élaboration de champs de communication avec le POS. Les champs et formats de données sont de préférence tels que prévus par le standard EMV. Les données téléchargées par OTA peuvent être placées dans tous les champs du registre PPSE visés par l'invention.

Le cas échéant, des seconds avantages (Vt) peuvent être introduits (alternativement ou cumulativement aux premiers avantages Vt) dans le terminal bancaire 2. L'introduction peut être effectué par les entités gestionnaires du parc de terminaux de paiement et être associés à des applications de paiements bancaires ou moyens de paiement (Visa Electron, Carte Bleu Visa, Visa premier...) ou système de paiement. Ces seconds avantages (Vt) peuvent être téléchargés ou mis à jour dans le terminal 2 par tout moyen de communication, notamment par communication OTA ou au cours d'une connexion avec un centre serveur via tout réseau informatique ou de télécommunication radiophonique. Ces seconds avantages (Vt) peuvent favoriser des banques émettrices d'applications de paiement.

Alternativement, le cas échéant, l'invention peut prévoir un programme supplémentaire DEX1 dans le dispositif, configuré avec des instructions pour élaborer des réponses « STATUT » avec des champs de données (de préférence ceux visés par l'invention) comprenant des avantages V1-V4 associés à chaque application quand ils existent. Ceci peut être fait avec des applications activées ou non.

Selon une caractéristique d'un mode préféré de l'invention, le procédé comprend une étape de configuration du terminal pour effectuer une sélection, dans le terminal, d'une application de paiement en fonction de ces avantages. La sélection peut être effectuée notamment manuellement par un utilisateur ou automatiquement. Concrètement, le terminal 2 est configuré avec un programme POSnEx expliqué ci-après pour réaliser la fonction susvisée. Le programme POSnEx peut comprendre des instructions configurées pour extraire des champs des communications reçues :
- des données comprenant des informations d'un premier type contenant des identifiants ADF1, ADF3 d'applications logicielles (ou de cartes de paiement électronique ou de moyens de paiement),
- et des premiers avantages V1-V4 associés à chaque identifiant ADF1, ADF3....

Alternativement, POSnEx peut extraire uniquement des informations de premier type ADF1, ADF3.... Puis POSnEx peut associer, le cas échéant, des seconds avantages (Vt non représentés) déjà contenus dans le terminal (chargés au préalable) ou chargés lors d'une connexion et interaction avec un centre serveur (30, 31) visé en fin de description).

Ainsi, l'invention prévoit que ces avantages V1-V4, Vt peuvent être introduits respectivement dans le dispositif 1 et/ou le terminal 2. POSnEx peut ainsi associer des premiers (V1-V4) et/ou seconds avantages (Vt) provenant respectivement du dispositif 1 et/ou reçus dans le terminal 2 avant ou lors la transaction.

Le programme « POSnEx » peut également comprendre des instructions pour proposer dans le terminal 2 (fig. 3, étape 130) une sélection manuelle d'une application de paiement en fonction de ces premiers (V1-V4) et/ou seconds avantages (Vt). A cet effet, le POS peut afficher pour chaque application l'avantage résultant et comporter une interface d'interaction homme / machine (bouton, écran tactile...) permettant une sélection de l'application de paiement par l'utilisateur.

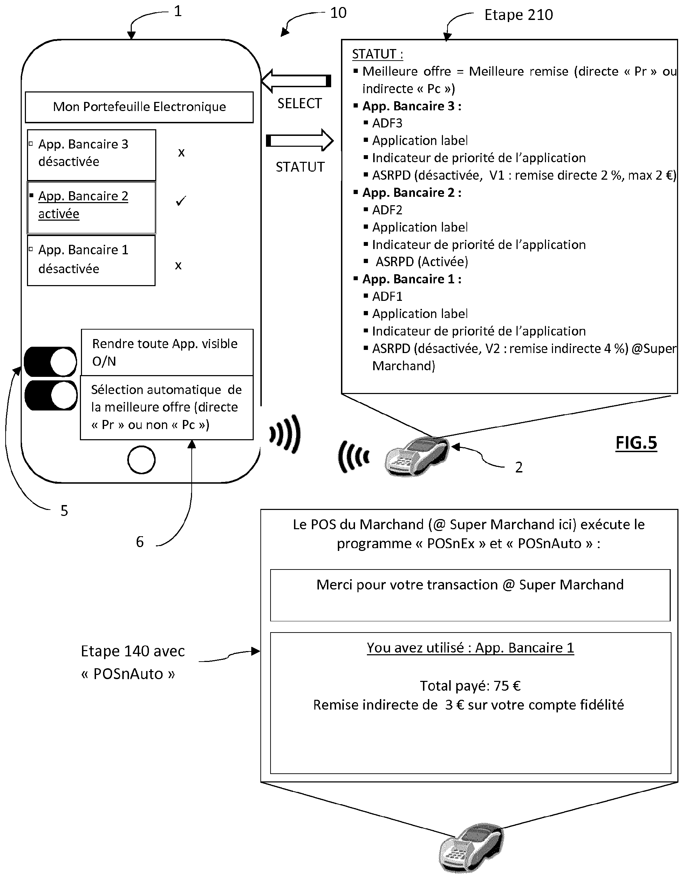

Avantageusement (voir fig.5), le programme POSnEx peut être complété par d'autres instructions pour devenir un programme « POSauto » de manière à effectuer automatiquement la sélection de l'application ou carte électronique de paiement.

S'agissant d'une même catégorie d'avantages (appelée information du troisième type), associée à deux applications AF1, AF2..., « POSauto » peut opérer en retenant l'avantage le plus important d'office pour sélectionner l'application logicielle de paiement (ou moyen de paiement) la plus intéressante pour l'utilisateur et/ou le marchand. Par exemple, pour les deux, il peut s'agir d'une remise immédiate « Tr », ou pour les deux une remise différée « Tc », ou pour les deux des points de fidélité « Tb ».

Alternativement, l'utilisateur peut choisir une catégorie d'avantage préféré (information du troisième type) par rapport à d'autres. Par exemple, il peut préférer dans l'ordre une remise immédiate « Tr » ou une remise différée « Tc », ou des points de fidélité « Tb ». Ce troisième type d'information peut également figurer parmi les données communiquées par le dispositif 1 au terminal 2. Il peut notamment être placé dans un des champs défini / permis par EMV, à un endroit (ou des champs décrits ultérieurement) prédéterminé du message, connu par le programme « POSauto » pour son extraction puis interprétation et exécution. Ce troisième type d'information peut également ou alternativement être pré chargé et activé dans le terminal 2 pour être proposé à l'utilisateur via le terminal ou être appliqué par défaut automatiquement. (Toutefois, de préférence, c'est l'utilisateur qui choisit cela sur son dispositif sans nécessité d'un pré chargement dans le terminal).

L'invention ici diffère de l'art antérieur défini par EMV qui peut prévoir une sélection automatique et traitement automatique dans le terminal POS d'une application logicielle de paiement (ou moyen de paiement) prioritaire par rapport à une autre application non-prioritaire toutes deux activées. Cet art antérieur n'est pas lié à des avantages associés à chaque application logicielle de paiement. De ce fait, l'utilisateur ne peut privilégier l'application apportant le meilleur avantage sur l'instant de la transaction.

### Description spécifique de la figure 3.

A la figure 3, est illustré un exemple 2bis d'un mode préféré de mise en oeuvre du procédé (ou de configuration du système) de transaction électronique de paiement de l'invention, dans lequel au moins une application parmi au moins deux applications, est non activée; Le POS 2 et le téléphone 1 peuvent être conformes aux modes décrits précédemment (figures 1 et 2) aux différences près ci-après.

Selon une caractéristique très avantageuse du mode préféré, les données communiquées au terminal 2 au cours de la transaction comprennent des informations (ADF1 ou ADF3) d'un premier type, relatives à (ou identifiant) au moins une application de paiement non-activée.

Cette caractéristique se distingue de l'art antérieur, défini notamment par EMV, qui ne prévoit pas de rendre visible les applications non-activées du dispositif 1 par le terminal 2. En effet, selon le standard EMV (PPSE and Application Management for Secure Element - Specification Version 1.0 May 2017), seules les applications activées figurant dans le registre PPSE ont leur identifiant renseigné dans la réponse « STATUT » du dispositif au terminal.

Donc, selon une caractéristique de ce mode préféré, le procédé peut comprendre une étape de configuration du dispositif 1 de manière à ce qu'il mémorise des informations d'un premier type (ADF3) d'une application non-activée dans un répertoire (PPSE) réservée à des applications activées. Les applications non activées peuvent être forcées, grâce à cette configuration, à être mentionnées avec leur identifiant (et le cas échéant avantages associés) dans ce répertoire réservé.

Le cas échéant, l'invention peut prévoir une écriture, notamment par OTA dans le PPSE, de données d'applications qui sont non-activées. De même, l'invention peut prévoir de charger un code ou des instructions, notamment par OTA, ou internet, WIFI, visant à écrire dans le PPSE des données relatives à des applications non-activées.

Alternativement, les applications non-activées ADF3 peuvent être listées dans un répertoire, notamment PPSE ou autre, avec les applications activées ; Elles peuvent posséder une indication « non-activée » dans un champ dédié à la place de la valeur « activée ». Elles peuvent comprendre une indication de blocage de l'application et une raison ou indication de motif de blocage. Cela permet à l'invention de pas inciter une utilisation d'une application qui aurait été non-activée, pour raison de blocage grave notamment d'une banque émettrice qui aurait conduit au rejet ou refus de la transaction.

Selon une caractéristique d'un mode préféré de mise en oeuvre ou de réalisation, le procédé comprend une étape de configuration du terminal 2 pour une sélection manuelle ou automatique d'une application de paiement en fonction de ces avantages dans le terminal. La sélection peut être directe par interaction, notamment manuelle, de l'utilisateur avec le POS.

Dans le cas de l'exemple 1bis (deux applications activées), le dispositif 1 peut ne pas être modifié /configuré par rapport à l'art antérieur (des avantages associés peuvent être pré-chargés dans le terminal bancaire). Ou à la limite, dans le cas où une première application activée est mise en priorité par rapport à la seconde par un utilisateur, l'invention peut prévoir de faire abstraction de la priorité et de traiter les applications non-prioritaires au même titre que celles prioritaires.

Dans le cas d'exemples 2bis et 3bis (relatifs respectivement une application activée et une non-activée ou deux applications non-activées), l'invention peut effectuer un traitement identique à l'application non-prioritaire. Plus précisément, bien qu'étant un concept moins préféré, l'invention peut prévoir de placer, (notamment grâce au programme DEX1 pouvant être liée à la fonction 5 figures 3-5), au moins l'identifiant ADF de chaque application non-activée ou (non prioritaire) dans un des champs de communication ci-après visés par l'invention. Ainsi, bien que moins préféré, l'invention peut prévoir un programme informatique DEX1 dans le dispositif 1 dont la fonction est de placer systématiquement, dans un champ secondaire de l'application prioritaire et/ou activée (notamment dans le registre PPSE), l'ADF1 à ADF4 d'au moins une seconde application de paiement, (même si cette dernière n'est pas prioritaire ou non-activée).

De même, selon ce concept moins préféré, si le dispositif contient plus de deux, ou trois ou quatre applications de paiement, toutes les applications secondaires non-prioritaires peuvent avoir leur « nom ADF » placé dans un des champs secondaires de l'application prioritaire ou une application activée, notamment dans le registre PPSE.

Parmi ces champs secondaires (visés par l'invention) susceptibles d'être remplis et communiqués au terminal, peuvent figurer un champ de données discrétionnaires des émetteurs FCI (Tag 'BF0C'), ou un champ des entrées du répertoire (Tag '61') ou un champ de données propriétaires de sélection d'application enregistrées (ASRPD, Tag '9F0A'). ASRPD signifie en anglais « Application Selection Registered Proprietary Data » ; Ce champ constitue un sous-champ de Directory Entry (Tag '61').

Ainsi, lorsque le dispositif élabore sa réponse « statut » conforme au standard EMV, cette dernière réponse contient non seulement l'ADF de l'application prioritaire (activée) mais également l'identifiant ADF d'au moins une autre application non-prioritaire ou non-activée, voire l'ADF de toutes les applications non prioritaires ou non-activées contenus dans les champs visés ci-dessus. Les champs visés peuvent ainsi (selon cette variante moins préférée) non seulement contenir des données d'avantages économiques ou mesures incitatives, mais aussi des identifiants d'application de paiement.

Alternativement, le programme DEX1 peut être configuré pour communiquer selon ou hors standard EMV, directement des informations relatives à plusieurs applications non-activées. Des informations d'un troisième type (catégories d'avantages) peuvent également être chargées dans le dispositif et/ou le terminal de la même manière que les avantages du premier type. Le programme DEX1 peut comprendre ou mettre en oeuvre un menu offrant l'une ou l'autre catégorie d'avantages au choix de l'utilisateur. La catégorie choisie par l'utilisateur peut être placée par le programme DEX1 dans un des champs de communication visés par l'invention.

Le dispositif 1 (téléphone) peut quant à lui, être configuré électroniquement et/ou avec le programme DEX1 / instructions informatiques et/ou données pour générer une réponse « STATUT » comprenant au moins des informations d'un premier type relatives à au moins deux applications de paiement activées ou non-activées ou non-prioritaires. Le programme DEX1 peut être configuré pour associer des valeurs d'avantages économiques, associées à chaque application logicielle de paiement et pré chargées dans une mémoire du dispositif. L'invention peut prévoir un mécanisme ou programme (qui peut être inclus dans DEX1) configuré par défaut pour forcer le dispositif à contenir dans le PPSE ou contenir dans la réponse STATUT, en plus de celles relatives aux applications activées, des informations concernant au moins une seconde application (activée, non-activée ou non prioritaire).

De préférence, le téléphone 1 peut être configuré pour (ou comprendre) une fonction ou option facilement sélectionnable 5 visant à rendre visible ou pas l'ensemble des applications bancaires avec indicateur visuel (Je souhaite rendre toutes mes applications bancaires (ou moyens de paiement) visibles ou pas). Ainsi, un utilisateur peut facilement placer dans le PPSE, avec son consentement, les informations de toutes les applications présentes de manière à les rendre visibles.

Alternativement, cette fonction ou option 5 peut être mise en oeuvre à distance par une instruction d'actionnement ou instruction incitant l'actionnement par l'utilisateur, communiquée notamment par OTA.

Selon cette fonction 5, les applications désactivées (marquées d'une croix) sont également renseignées ou listées ou ajoutées en plus aux applications activées dans la réponse « STATUT » du téléphone vers le POS. Cette fonction 5 peut être associée au programme DEX1 du dispositif pour l'activer directement.

Le POS, de son côté, possède un programme d'exécution « POSnEx » ; Ce programme est configuré pour lire ou extraire les données / informations (des secondes informations ADF2, ADF3 en plus de premières informations ADF1) reçues via « STATUT » et maintenues provisoirement, notamment dans une mémoire RAM1. Les données / informations sont placées dans les champs susvisés pour mettre en oeuvre l'invention (connaître d'autres applications présentes et proposer de les utiliser notamment en proposant un avantage économique).

Dans l'exemple, figure 3, le téléphone 1 comprend trois applications de paiement (1-3) dont l'application 2 seule est activée (comme à la figure 1). Toutefois, le dispositif de paiement 1 transmet dans sa réponse « STATUT » des informations ADF3 relatives à au moins une autre application non-activée. Ici, des secondes informations ADF1, ADF3 relatives aux deux applications bancaires non-activées 1 et 3, sont également transmises au POS dans sa réponse « STATUT » en réponse à sa requête « SELECT ». Seule l'application bancaire 2 avec des premières informations ADF2 est activée.

Les informations comprennent ici pour l'application bancaire 3 :
- L'ADF : ADF3 ou App. Bancaire 3;
- Le label de l'application (optionnel);
- Les données de l'ASRPD :(désactivé, V1: remise 2 %, max 2 €).

Les informations « STATUT » comprennent ici pour l'application bancaire 2 :
- L'ADF : ADF2 ou App. Bancaire 2;
- Le label de l'application (optionnel) ;
- Les données de l'ASRPD :(Activée).

Les informations comprennent ici pour l'application bancaire 1 :
- L'ADF : ADF1 ou App. Bancaire 1 ;
- Le label de l'application (optionnel) ;
- Les données de l'ASRPD :(désactivé, V2 : remise 4 % @ Super Marchand).

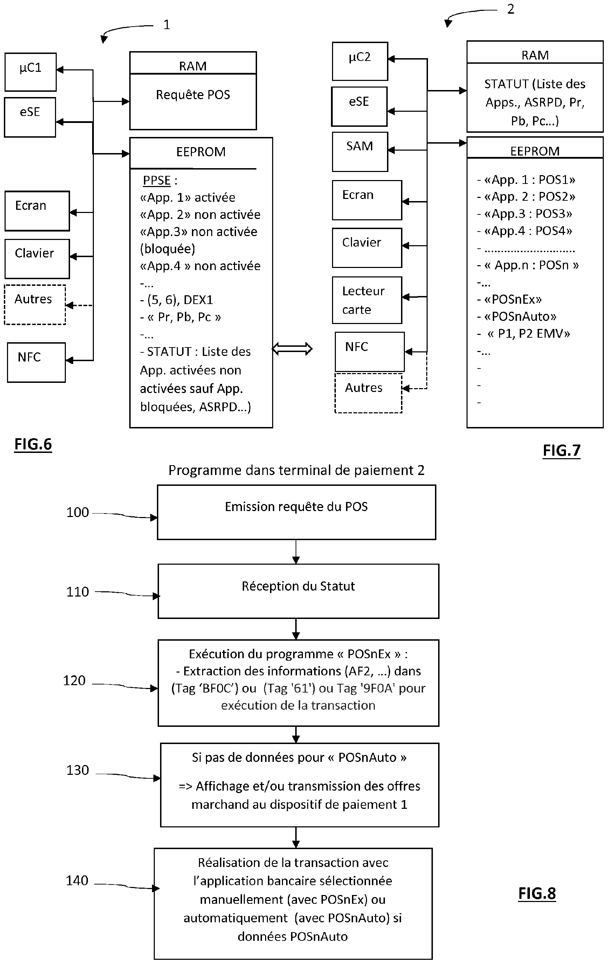

Ensuite, le lecteur 2 POS traite ces informations reçues à l'aide de son microcontrôleur µC2 qui exécute un logiciel de traitement ou programme « POSnEx » (étape 130 fig.3 ou fig.8), (POSnEx peut être stocké dans une mémoire non volatile EEPROM du POS ou associé au POS, par exemple à l'aide d'une carte à puce de personnalisation ou de mise à jour, qui peut être lue par le POS, notamment au cours ou avant son opération).

Le programme « POSnEx » est exécuté en intégrant ou utilisant les données reçues dans le « STATUT » et en particulier celles contenues dans le champ de l'ASRP (relatives à une règle de calcul d'avantage économique). L'exécution des instructions du programme POSnEx avec les données reçues, conduit à une présentation d'avantages à l'utilisateur calculés par le POS selon l'application de paiement qui sera utilisée.

Ainsi, grâce au programme spécifique de l'invention « POSnEx », le POS 2 peut de préférence informer l'utilisateur (notamment par affichage sur son écran ou autre, message vocal...), les avantages économiques dont il peut bénéficier selon le moyen de paiement (ou application bancaire) choisi pour la transaction (étape 130 fig.3 ou fig.8) (par ordre de meilleure offre directe et indirecte):
- Pour l'application Bancaire 1, pour laquelle le marchand « Super Marchand », offre un avantage V2 de crédit d'une valeur de 4% « cash back » de 3€, pour un sous total et total de 75 € ;
- Pour l'application Bancaire 3, le marchand offre un avantage V1 de remise immédiate d'une valeur de 2 % (limitée à 1,5 € par la règle) associée à l'application bancaire 3 dans le champ ASRP, pour un sous-total de 75 € et total remisé (- 1,5 €) de 73,5 € ;
- Pour l'application Bancaire 2, le marchand n'offre rien et le sous-total et total est de 75 €.

A une étape suivante, l'utilisateur observe quels seront les avantages économiques résultant de l'utilisation de chacun des trois moyens de paiement présentes dans son téléphone. Puis, il sélectionne (20) l'application bancaire qui lui offre les meilleurs avantages, à savoir le moyen de paiement 3 sur le POS à l'aide d'un écran tactile ou des touches du clavier du POS. C'est l'application bancaire 3 qui lui fait la plus importante remise immédiate 1,5 € (La première application 1 offre plus mais de manière différée). L'utilisateur est libre de faire un autre choix qui répond mieux à ses attentes.

Cette sélection par l'utilisateur, provoque la mise en oeuvre d'étapes subséquentes à POSnEx comprenant une sélection et activation dans le POS 2, d'une application bancaire de lecture « POS3 » (correspondant à l'application de paiement 3).

L'articulation entre les programmes POSnEx et POS3 peut s'effectuer de différentes manières connues de l'homme de l'art. Par exemple, à réception de « statut », POSnEx opère en priorité par rapport aux applications EMV POSn du POS, mettant l'exécution des applications POSn en suspend jusqu'à un affichage et une sélection de l'utilisateur de l'une d'entre elles. Une sélection de l'utilisateur reboucle le programme POnEx sur une des applications de lecture POSn choisie. En fait, le POS passe, de préférence ici, en mode d'interrogation directif forcé par l'utilisateur.

En mode EMV, l'application de lecture du POS est mise en oeuvre par lecture de l'identifiant ADF de l'application activée lue par le POS. Tout ceci peut être fait dans un POS basé sur EMV, sauf que le choix automatique ou pas se fait sur un critère de priorité qui se trouve dans le « PPSE ». Par exemple, s'il y a deux applications, l'une en priorité 1 et l'autre en priorité 2, le terminal choisit la première, sauf s'il a été configuré pour choisir la deuxième. S'il y a deux applications avec la même priorité 1, le porteur choisit sur l'écran du POS, sauf s'il a été configuré pour choisir l'application qui l'intéresse.

A l'étape suivante, après sélection de POSn l'utilisateur présente à nouveau son téléphone au POS (le cas échéant sur instructions possibles affichées du POS). La présentation déclenche la réalisation de la transaction sans-contact par le POS en mettant en oeuvre l'application bancaire 3 sélectionnée du lecteur POS (correspondant à l'application bancaire carte 3 du téléphone). Bien que l'application carte bancaire 3 dans le téléphone soit marquée comme étant non-activée dans le champ ASRPD, la transaction s'effectue quand même.

Alternativement, plusieurs applications de carte bancaire peuvent être activées par l'utilisateur (ou par défaut grâce à une étape de POSnEx) et visibles par le POS via l'information « STATUT » émise du téléphone en réponse à la requête EMV du POS. Il est alors optionnel d'avoir une configuration du téléphone nécessaire à la mise en oeuvre d'une sélection de la fonction 5 (*Je veux rendre toutes les applications de paiement visibles*).

L'information relative à l'application désactivée est plus informative pour le POS. Il ne l'utilise pas dans l'art antérieur. Cette information ne rend pas l'application inactive pour autant au niveau du téléphone notamment pour une utilisation directive forcée. La configuration (ou option) de sélection 5 (Je *veux rendre toutes les applications de paiement visibles*) force le téléphone à transmettre des informations mêmes sur les applications non-activées. Cette sélection 5 déclenche une mémorisation des informations de toutes les applications de paiement présentes, dans le PPSE comme si elles étaient activées. Le cas échéant, l'invention peut prévoir de mémoriser ces informations de toutes les applications non-activées dès lors qu'elles ne sont pas bloquées.

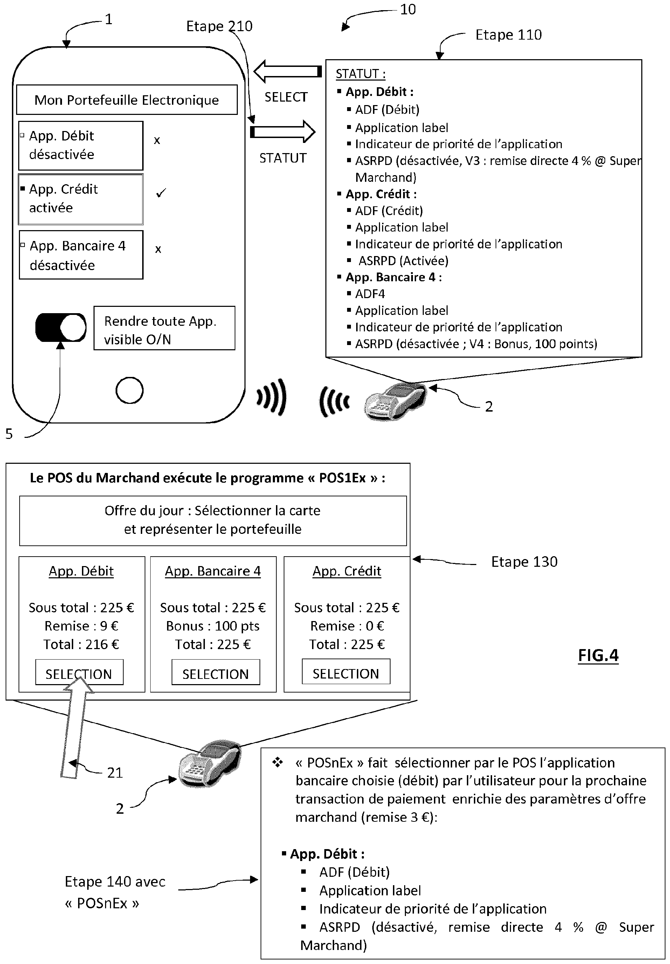

### Description spécifique de la figure 4.

A la figure 4, selon un second mode de mise en oeuvre ou de réalisation, le téléphone 1 comprend trois applications de carte de paiement « Débit », « Crédit », « 4 » dont l'application carte de « Débit » seule est activée. Toutefois, le dispositif de paiement 1 transmet, dans sa réponse « STATUT », des informations relatives à au moins une autre application carte de paiement électronique non-activée. Ici, des informations relatives aux deux applications cartes bancaires non-activées « Débit » et « 4 » et celle activée « Crédit » sont transmises au POS dans sa réponse « STATUT » en réponse à sa requête « SELECT » :

Les informations comprennent ici pour l'application de « Crédit » :
- L'ADF : « App. Crédit » ou « ADF (Crédit) » ;
- Le label de l'application (optionnel) ;
- Les données suivantes de l'ASRPD : (Activée)

Les informations comprennent ici pour l'application de « Débit » :
- L'ADF : « App. Débit » ou « ADF (Crédit) » ;
- Le label de l'application (optionnel)
- Les données suivantes de l'ASRPD : (désactivée, V3 : remise 4 % @ « Super Marchand »)

L'ASRPD comprend dans une partie du champ disponible en plus de l'indication d'une désactivation, une règle de calcul d'avantage V3 relative à aux transactions effectuées chez un marchand particulier (ici chez le marchand « Super Marchand »).

Les informations comprennent ici pour l'application bancaire 4 :
- L'ADF : ADF4 ou « App. Bancaire 4 » ;
- Le label de l'application bancaire 4 (optionnel)
- Les données suivantes de l'ASRPD : (désactivée ; V4 : Bonus, 100 points)

Ainsi, grâce à « POSnEx », le POS peut afficher sur son écran, le résultat escompté (étape 130 fig.4 ou fig.8) de la transaction en fonction de l'application utilisée (par ordre de meilleure offre):
- Pour l'application de « Débit », un sous total de 225 € et total de 216 € (remisé de 9€) ;
- Pour l'application « Bancaire 4 », le marchand offre un sous total et un total de 225 € avec un bonus de 100 points ;
- Pour l'application de « Crédit », le marchand n'offre rien et le sous-total et total est de 225 €.

A une étape suivante, l'utilisateur observe sur l'écran du POS quel sera le résultat escompté de la transaction pour les trois applications de paiement présentes dans son téléphone. Puis, il sélectionne par exemple (21) l'application de « Débit » sur le POS à l'aide d'un écran tactile (ou des touches du clavier) du POS. C'est l'application de « Débit » qui lui fait la plus importante remise immédiate (9€).

Cette sélection par l'utilisateur, provoque (étape 140 fig.3 ou fig.8) grâce à « POSnEx » une sélection par le POS d'une application lecteur de carte bancaire de « Débit » (D1) correspondant à l'application carte de « Débit » du téléphone.

A l'étape suivante, l'utilisateur présente à nouveau son téléphone au POS (le cas échéant sur instructions possibles affichées du POS). La présentation du téléphone à proximité du POS déclenche la réalisation de la transaction sans-contact par le POS en mettant en oeuvre l'application lecteur de carte bancaire de « Débit » « Débit 1 » du POS correspondant à l'application carte de « Débit » du téléphone.

Le programme POSnEx peut faire réaliser la transaction bancaire en appliquant l'avantage économique affiché liée à la carte bancaire de débit. Alternativement, une fois le choix réalisé, ce peut être programme classique du POS qui réalise la transaction. Selon le cas, cela peut être un montant total qui est altéré par une règle de remise directe appliquée/ exécutée par POSnEx et communiquée à POSn pour traitement ; Cela peut être des points de fidélité, ou un crédit différé (cash back) appliquée / exécutée par POSnEx parallèlement à l'exécution de l'application lecteur de carte bancaire sélectionnée.

Il faut observer que bien que l'application bancaire correspondante de « Débit » dans le téléphone soit également marquée comme étant désactivée dans le champ ASRPD, la transaction se réalise quand même de manière directive.

### Description spécifique de la figure 5.

A la figure 5 est décrit un exemple sensiblement identique à celui de la figure 3. Il diffère notamment en ce que le téléphone comprend ou est configuré avec une fonction 6 sélectionnable de sélection automatique de la meilleure offre du marchand (ici remise directe) pour la transaction.

L'exemple, ici, diffère en ce que l'information comprise dans « STATUT » comprend une indication ou instruction supplémentaire servant au calcul automatique de la meilleure offre et de sélection automatique de la meilleure offre ou application (étape 210 fig.5 ou fig.8). L'exemple diffère également en ce que c'est l'application bancaire 1 qui est utilisée au lieu de l'application bancaire 3 du fait d'un paramètre utilisateur introduit dans le téléphone pour autoriser la sélection automatique par le terminal de paiement de la meilleure offre directe ou indirecte.

Le POS est donc configuré en conséquence avec un programme « POSnEx » et avec en plus des instructions « POSnAuto » permettant de calculer automatiquement la meilleure offre du marchand en fonction éventuellement de paramètres (ou catégories d'avantages) préférentiels (Pr, Pf, Pb) de l'utilisateur que ce dernier peut indiquer ou activer dans le téléphone.

Le programme « POSnAuto » peut être déclenché par une lecture d'un indicateur sélectionné par l'utilisateur. Si indicateur détecté par un test, le programme se branche sur une application « POSn » directement avec des valeurs de remise immédiate ou différée. De ce fait, l'étape d'affichage des résultats escomptés sur le POS, n'est pas mise en oeuvre. Les paramètres ci-dessus peuvent comprendre une préférence sélectionnable, par exemple, pour la meilleure remise immédiate « Pr » ou le meilleur bonus « Pb » pour des points de fidélité ou pour un meilleur montant de reversement « Pc » ou remise indirecte (cash back), etc.

Le programme POS1 (correspondant à l'application bancaire 1 ou ADF1) est exécuté en intégrant ou utilisant les données reçues dans « STATUT » et en particulier celles contenues dans le champ de l'ASRP et les données « Pc » indiquant que la meilleure offre est égale à la meilleure remise indirecte. L'exécution des instructions du programme POS1 avec les nouvelles données reçues, conduit donc à déterminer automatiquement la meilleure application bancaire pour l'utilisateur(étape 120 fig.5 ou fig.8).

A une étape suivante, (étape 140 fig.5 ou fig.8) le POS calcule avec les programmes « POSnEx » et « POSnAuto » quel sera le meilleur résultat de la transaction pour les trois applications de paiement présentes dans le téléphone. Puis, il sélectionne (22) automatiquement l'application lecteur de carte bancaire POS1 sur le POS correspondant à l'application carte bancaire 1. C'est en effet l'application carte bancaire 1 qui offre la plus importante remise indirecte (cash back) correspondant au critère de sélection « Pc » présélectionné par l'utilisateur.

Le POS affiche sur son écran une présentation du résultat et de l'application de paiement utilisée :
- « Merci pour votre transaction chez « Super Marchand » ;
- Vous avez utilisé l'application bancaire 1,
- Total payé de 75 €.
- Gain de 3 € « cash back » sur votre compte fidélité »

Avantageusement, dans cet exemple, grâce à la fonction de sélection automatique de l'application bancaire par le POS, l'utilisateur peut n'avoir qu'à présenter une seule fois son téléphone. Le cas échéant, l'utilisateur peut être amené à le présenter son dispositif à nouveau au POS (notamment sur instructions possibles affichées du POS).

La présentation du dispositif au POS déclenche la réalisation de la transaction sans-contact par le POS en mettant en oeuvre l'application lecteur de carte bancaire POS1 sélectionnée du POS (correspondant à l'application carte bancaire 1 du téléphone).

On fait observer que, grâce à l'invention, bien que l'application bancaire correspondante 1 dans le téléphone soit marquée comme étant désactivée dans le champ ASRPD, la transaction se réalise quand même, les fonctions de sélection 5 et 6 étant activées.

La sélection automatique peut s'effectuer également en absence de l'option 5 activée dans le cas notamment où plusieurs applications bancaires sont activées et donc communiquées au POS pour traitement dans l'information « STATUT ». De préférence, l'invention prévoit que si l'option 5 n'est pas activée, c'est la règle des priorités EMV qui s'appliquent.

Selon un autre mode de mise en oeuvre, l'invention peut prévoir une sélection par l'utilisateur du type « *Parmi mes applications (ou moyens de paiement) activées, je souhaite pouvoir sélectionner sur le terminal POS l'application qui m'offre le plus d'avantages* ». De ce fait, les informations relatives aux applications de paiement uniquement activées sont transmises au POS.

Alternativement, si l'option automatique « POSauto » est sélectionnée, la transaction la plus intéressante (selon des critères présélectionnés de l'utilisateur) peut s'effectuer directement. L'utilisateur peut alors être informé de l'application activée qui a été utilisée et des avantages obtenus.

Le cas échéant, le système 10 peut intégrer également (non représentés) un centre serveur bancaire 30 et/ou un centre serveur de (ou pour des) marchands (31) ou tout autre centre serveur en ligne comptabilisant ou effectuant des opérations liées aux transactions. Lors d'une transaction, le téléphone 1 et/ou le POS 2 peuvent interroger (ou interagir avec) l'un des centres serveurs (ci-dessus) pour avoir des informations complémentaires notamment économique, (offre flash marchand 32, offre bancaire 33..., compte utilisateur de bonus en ligne 34, compte de points de fidélité utilisateur en ligne 35, compte de crédit ou cash back utilisateur en ligne 36. L'interaction peut consister à mettre à jour un compte quelconque (utilisateur, marchand ou autre reversement à un compte d'association a thème quelconque notamment contre une maladie, écologique, social, de mécénat, caritative...) distant en ligne suite à une transaction.

Ainsi, l'invention permet d'élargir les possibilités de transactions, d'avantages ou d'impacts économiques, liées à l'usage de l'une ou l'autre application de paiement de manière très pratique pour l'utilisateur.

Le mobile peut se connecter à un serveur distant qui va lui donner des offres préférentielles (qui seront indiquées dans une seconde information). De même le POS peut se connecter à un système distant sur lequel il viendra incrémenter par exemple un compte de points suite à la transaction ou informer l'utilisateur de son éligibilité à une offre quelconque quand ses points atteignent un seuil.

Dans la mise en oeuvre, l'invention peut prévoir des connexions et mises à jour des comptes utilisateur 34-36 et/ou mise à jour des offres bancaires 33 ou marchands 32.

### Descriptions spécifiques des figures 6-9.

Les figures 6 et 7 illustrent respectivement un schéma bloc électronique du dispositif de paiement 1 et terminal de paiement 2. Les constituants comprennent principalement un microcontrôleur µc1 et µc2 relié à des mémoires de travail RAM et mémoire programme, et des moyens de communications notamment NFC. Ils peuvent comprendre d'autres constituants ou moyens électroniques tels indiqués sur les figures.

A la figure 8 des étapes illustrent un mode préféré de mise en oeuvre de l'invention ou un programme, pour le dispositif de paiement 1. Les étapes 200 à 240 (réception requête, élaboration de la réponse, émission de la réponse avec informations spécifiques dans les champs dédiés (Tag 'BF0C' ou Tag '61' ou Tag '9F0A') sont également illustrées pour la plupart sur les figures 3 à 5.

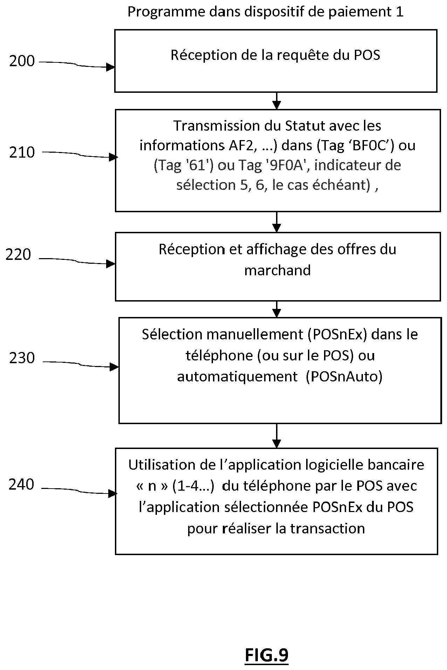

A la figure 9 des étapes illustrent un mode préféré de mise en oeuvre de l'invention ou un programme correspondant à exécuter par µc2, pour le terminal de paiement 2. Les étapes 100 à 140 (émission requête, réception de la réponse, extraction des données/informations spécifiques des champs dédiés ci-dessus, exécution du programme « POSnEx » avec lesdites informations spécifiques sont également illustrées pour la plupart sur les figures 3 à 5.

Selon une caractéristique l'invention peut prévoir, que les données communiquées au terminal par le dispositif peuvent comprendre une information d'un second type indiquant pourquoi une application est non-activée (choix porteur, ou blocage du moyen de paiement par l'émetteur etc.)

Cette information de second type est utile (et préférable), mais pas strictement nécessaire. Elle n'est pas obligatoire dans la mesure où, si une application est non-activée parce qu'elle est bloquée (au sens blocage EMV, et non pas blocage au niveau du serveur d'autorisation), la fonction « SELECT APP » (juste après le « SELECT PPSE ») renverra une erreur, et le terminal passera à l'application suivante dans sa liste de priorité (comportement EMV). Dans ce cas, le POS peut quand même la considérer sans compromettre le paiement.

Cependant, si une application est indiquée comme non-activée car bloquée par l'émetteur du moyen de paiement (la banque), il est préférable que l'application sur le terminal ne la propose pas (POSnEx) / ne la sélectionne pas (POSnAuto) au risque de perdre du temps notamment dans l'envoi du message d'erreur.

## Revendications

1. Procédé pour réaliser une transaction de paiement sur un terminal bancaire (2, POS) avec un dispositif (1) de paiement électronique, ledit dispositif comprenant au moins deux applications de paiement (1-4), ledit procédé comprenant :
- une étape de communication de données (STATUS) du dispositif vers le terminal lors d'une transaction, lesdites données comprenant au moins des informations d'un premier type (ADF1, ADF2) identifiant chaque application de paiement du dispositif,
- une étape d'association de valeurs économiques (V1-V4) d'avantages pour l'usage de l'une et/ou l'autre application de paiement,
**caractérisé en ce qu'**il comprend une étape de configuration du terminal pour effectuer une sélection manuelle (POsnEx) ou automatique (POSauto) dans le terminal (2) d'une application de paiement en fonction de ces avantages.

2. Procédé selon la revendication précédente, **caractérisé en ce que** lesdites données comprennent des informations d'un premier type (ADF) relatives à au moins une application de paiement non-activée (1, 3).

3. Procédé selon la revendication précédente, **caractérisé en ce qu'**il comprend une étape de mémorisation desdites données dans un répertoire (PPSE) réservée à des applications activées.

4. Procédé selon l'une des revendications 2 ou 3, **caractérisé en ce que** lesdites données comprennent une information d'un second type indiquant pourquoi une application est non-activée.

5. Procédé selon l'une des revendications précédentes, **caractérisé en ce qu'**il comprend une étape de configuration du dispositif de manière que lesdites données communiquées (STATUT) comprennent des informations d'un troisième type, ledit troisième type étant relatif à des catégories d'avantages préférentiels (Pr, Pb, Pc) présélectionnés par un utilisateur dans son dispositif.

6. Procédé selon l'une des revendications précédentes, **caractérisé en ce que** l'étape d'association de valeurs économiques (V1-V4) d'avantages pour l'usage de l'une et/ou l'autre application de paiement, s'effectue dans le dispositif (1) de manière que lesdites données communiquées (STATUT) comprennent lesdites valeurs économiques d'avantages.

7. Procédé selon l'une des revendications précédentes, **caractérisé en ce que** ladite communication de données s'effectue dans une réponse (STATUT) du dispositif (1) à une requête (SELECT) du terminal conformément à un standard tel qu'EMV.

8. Procédé selon l'une des revendications précédentes, **caractérisé en ce que** lesdites données communiquées sont placées dans un champ de données discrétionnaires des émetteurs FCI (Tag 'BF0C'), dans un champ des entrées du répertoire (Tag '61') ou dans un champ de données propriétaires de sélection d'application enregistrées (ASRPD, Tag '9F0A').

9. Système pour réaliser une transaction de paiement sur un terminal bancaire (2, POS) avec un dispositif (1) de paiement électronique, ledit dispositif comprenant au moins deux applications de paiement (1-4), ledit système étant configuré pour :
- effectuer une de communication de données (STATUS) du dispositif (1) vers le terminal (2) lors d'une transaction, lesdites données comprenant des au moins des informations d'un premier type (ADF1, ADF2) identifiant chaque application de paiement du dispositif,
- associer des valeurs économiques d'avantages (V1-V4) pour l'usage de l'une et/ou l'autre application de paiement ;
**caractérisé en ce que** le terminal est configuré pour effectuer une sélection manuelle (POSnEx) ou automatique (POSauto) dans le terminal d'une application de paiement en fonction de ces avantages.

10. Système selon la revendication précédente, **caractérisé en ce que** ladite information du premier type (ADF1) est placée dans un champ de données discrétionnaires des émetteurs FCI (Tag 'BF0C') ou dans un champ des entrées du répertoire (Tag '61') ou dans un champ de données propriétaires de sélection d'application enregistrées (ASRPD, Tag '9F0A').

11. Système (10) selon l'une des revendications 9 ou 10, **caractérisé en ce que** qu'il comprend un centre serveur bancaire (30) et/ou un centre serveur de marchands (31) et **en ce qu'**il est configuré de manière que, lors d'une transaction, le dispositif (1) et/ou le terminal (2) interroge(nt) l'un desdits centres serveurs pour avoir des informations complémentaires économiques (32-36) ou interagir avec ces serveurs (30, 31).
